(19) Europäisches Patentamt
European Patent Office
Office européen des brevets

(11) **EP 4 130 780 A1**

(12) **EUROPEAN PATENT APPLICATION**
published in accordance with Art. 153(4) EPC

(43) Date of publication:
**08.02.2023 Bulletin 2023/06**

(21) Application number: **21781705.5**

(22) Date of filing: **02.03.2021**

(51) International Patent Classification (IPC):
$G01S\ 7/03^{(1990.01)}$ $C08J\ 9/12^{(1974.07)}$
$H01Q\ 1/42^{(1968.09)}$

(52) Cooperative Patent Classification (CPC):
**C08J 9/12; G01S 7/03; H01Q 1/42**

(86) International application number:
**PCT/JP2021/008001**

(87) International publication number:
**WO 2021/199857 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020 JP 2020064891**

(71) Applicant: **NITTO DENKO CORPORATION**
**Ibaraki-shi**
**Osaka 567-8680 (JP)**

(72) Inventors:
• **SAKAMOTO Koji**
**Ibaraki-shi, Osaka 567-8680 (JP)**
• **ITO Takahiko**
**Ibaraki-shi, Osaka 567-8680 (JP)**
• **OE Naoto**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **RESIN SHEET AND RADAR SYSTEM**

(57) A resin sheet 1a includes the porous structure 10. The porous structure 10 is configured to adjust transmission of a millimeter wave. The porous structure has a relative permittivity varying in a thickness direction of the resin sheet 1a such that a difference between average relative permittivities in two adjacent layer portions 11 is a predetermined value or less, the layer portions 11 each having a particular thickness smaller than a wavelength of the millimeter wave. The porous structure 10 includes a boundary portion 11b being one of the layer portions 11, the boundary portion 11b having a maximum average relative permittivity. The relative permittivity increases in stages from end portions 12 of the porous structure 10 toward the boundary portion 11b, the end portions 12 being defined in the thickness direction of the resin sheet 1a.

FIG. 1

EP 4 130 780 A1

**Description**

TECHNICAL FIELD

The present invention relates to a resin sheet and a radar system.

BACKGROUND ART

Radars have been used to detect objects. Adjusting members allowing transmission of radio waves from radars therethrough have been known.

For example, a system including a radar sensor and an adjusting member is described in Patent Literature 1. This system is to be mounted on a motor vehicle so that the adjusting member will allow transmission of a radio wave from the radar sensor therethrough. The adjusting member includes at least one layer that reflects a portion of the radio wave. The adjusting member includes an additional layer configured based on a thickness and a permittivity suitable for reducing reflection of the radio wave. The adjusting member is a bumper. The radar sensor is, for example, a 77-GHz radar.

CITATION LIST

Patent Literature

Patent Literature 1: US 2015/0109162 A1

SUMMARY OF INVENTION

Technical Problem

In the technique described in Patent Literature 1, the adjusting member includes the additional layer configured to reduce reflection of the radio wave. However, in Patent Literature 1, adjustment of transmission of a millimeter wave from a millimeter-wave radar using a frequency-modulated continuous wave (FMCW) is not taken into consideration.

Therefore, the present invention provides a resin sheet that is advantageous in view of adjusting transmission of a millimeter wave from a millimeter-wave radar using an FMCW.

Solution to Problem

The present invention provides a resin sheet including:

    a porous structure configured to adjust transmission of a millimeter wave, wherein
    the porous structure has a relative permittivity varying in a thickness direction of the resin sheet such that a difference between average relative permittivities in two adjacent layer portions is a predetermined value or less, the layer portions each having a particular thickness smaller than a wavelength of the millimeter wave,
    the porous structure includes a boundary portion being one of the layer portions, the boundary portion having a maximum or minimum average relative permittivity, and
    the relative permittivity increases or decreases in stages from end portions of the porous structure toward the boundary portion, the end portions being defined in the thickness direction of the resin sheet.

The present invention also provides a radar system including:

    a millimeter-wave radar using a frequency-modulated continuous wave; and
    the above resin sheet allowing transmission of a millimeter wave emitted from the millimeter-wave radar through the resin sheet.

Advantageous Effects of Invention

The above resin sheet is advantageous in view of adjusting transmission of a millimeter wave from a millimeter-wave radar using an FMCW. With the use of the above radar system, transmission of a millimeter wave from a millimeter-wave radar using an FMCW can be adjusted to a desired state.

BRIEF DESCRIPTION OF DRAWINGS

FIG. 1 is a cross-sectional view showing an example of the resin sheet according to the present invention.
FIG. 2 is a graph showing a varying relative permittivity of a porous structure.
FIG. 3 is a cross-sectional view showing another example of the resin sheet according to the present invention.
FIG. 4 is a graph showing a varying relative permittivity of a porous structure.
FIG. 5 shows an example of the radar system according to the present invention.
FIG. 6 is an X-ray CT image showing an example of a cross-section of a resin sheet according to Example 1.

DESCRIPTION OF EMBODIMENTS

It is conceivable to use, for sensing a given object, a millimeter-wave radar using an FMCW. In this case, a given structure such as a housing may be needed to be disposed in a transmission-reception path of a millimeter wave to protect the millimeter-wave radar. It is thought that widening a frequency range of a millimeter wave used for sensing an object using the above millimeter-wave radar is advantageous in improving the accuracy of object sensing. Therefore, the present inventors conducted intensive studies to invent a sheet capable of being included in a structure disposed in a transmission-reception path to protect a millimeter-wave radar, the sheet being capable of improving transmission of a millimeter wave in a wide frequency range. Through much trial and error, the present inventors have newly found that a resin sheet having a given porous structure is advantageous in enhancing transmission of a millimeter wave in a wide frequency range and have completed the present invention.

Hereinafter, embodiments of the present invention will be described with reference to the drawings. The following description describes examples of the present invention, and the present invention is not limited to the following embodiments.

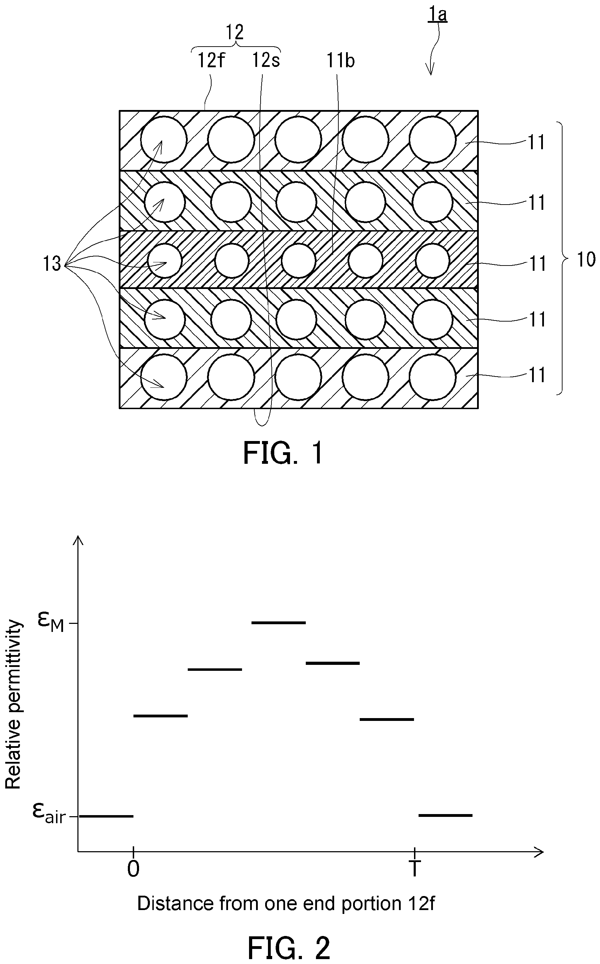

As shown in FIG. 1, a resin sheet 1a includes a porous structure 10. The porous structure 10 is configured to adjust transmission of a millimeter wave. As shown in FIG. 2, the porous structure 10 has a relative permittivity varying in a thickness direction of the resin sheet 1a such that a difference $\Delta\varepsilon$ between average relative permittivities $\varepsilon_L$ in two adjacent layer portions 11 is a predetermined value Ve or less, the layer portions 11 each having a particular thickness $t_L$ smaller than a wavelength of the millimeter wave. Additionally, the porous structure 10 includes a boundary portion 11b. The boundary portion 11b is one of the layer portions 11 and has a maximum average relative permittivity $\varepsilon_A$. In the porous structure 10, the relative permittivity increases in stages from end portions 12 of the porous structure 10 toward the boundary portion 11b, the end portions 12 being defined in the thickness direction of the resin sheet 1a. With such structural features, in the porous structure 10, a relative permittivity variation rapid enough to affect millimeter-wave propagation can be prevented at an interface between the porous structure 10 and another substance such as air and inside the porous structure 10. Consequently, the resin sheet 1a can reduce reflection of the millimeter wave and can have an increased millimeter-wave transmittance. In particular, the resin sheet 1a can have an increased transmittance of a wideband millimeter wave from a millimeter-wave radar using an FMCW. With the resin sheet 1a, a transmission loss [dB] of a perpendicularly incident millimeter wave in a bandwidth of 60 to 80 GHz can be reduced by, for example, 35% or more, desirably 40% or more, more desirably 45% or more, even more desirably 50% or more, compared to the case without the resin sheet 1a.

The boundary portion 11b may be one of the layer portions 11 and has a minimum average relative permittivity $\varepsilon_A$. In this case, in the porous structure 10, the relative permittivity decreases in stages from the end portions 12 of the porous structure 10 toward the boundary portion 11b, the end portions 12 being defined in the thickness direction of the resin sheet 1a. With such structural features, a relative permittivity variation rapid enough to affect millimeter-wave propagation can be prevented even when the end portions 12 of the resin sheet 1a are in contact with a substance having a relatively high relative permittivity. Consequently, the resin sheet 1a can reduce reflection of a millimeter wave and can have an increased millimeter-wave transmittance.

Typically, the entire porous structure 10 satisfies the requirement that the difference $\Delta\varepsilon$ between average relative permittivities in each two adjacent layer portions 11 is the predetermined value Ve or less.

As shown in FIG. 1, the end portions 12 of the porous structure 10 include one end portion 12f and the other end portion 12s. In FIG. 2, a distance T from the one end portion 12f corresponds to the thickness of the porous structure 10. In FIG. 2, the end portions 12 of the porous structure 10 are assumed to be in contact with air. In FIG. 2, $\varepsilon_{air}$ represents a relative permittivity of air, and $\varepsilon_M$ represents the largest value of the average relative permittivities $\varepsilon_L$. A boundary between each two layer portions 11 may be real or imaginary.

For example, the relative permittivity of the porous structure 10 can be adjusted as described above by varying the porosity in stages in the thickness direction of the porous structure 10.

An average relative permittivity $\varepsilon_L$ in each layer portion 11 of the porous structure 10 can be determined, for example, by the following equation (1). In the equation (1), $\varepsilon_K$ is a relative permittivity of the material of a skeleton of the porous structure 10, $\varepsilon_{air}$ is the relative permittivity of air, and p is a porosity (0 < p < 1) in the layer portion 11. The porosity p in each layer portion 11 can be determined, for example, based on the X-ray CT measurement result for the porous structure 10. The relative permittivity of the material of the skeleton of the porous structure 10 is, for example, a relative permittivity measured at 10 GHz by a cavity resonance method.

$$\varepsilon_L = p\varepsilon_{air} + (1 - p)\varepsilon_K \qquad \text{Equation (1)}$$

The particular thickness $t_L$ is not limited to a particular value as long as the particular thickness $t_L$ is smaller than the wavelength of a millimeter wave. The particular thickness $t_L$ is, for example, 100 μm. The predetermined value Ve is not limited to a particular value as long as the resin sheet 1a can have an increased transmittance of a millimeter wave. The predetermined value Ve is, for example, 0.3. The predetermined value Ve is desirably 0.25.

The largest value of $\Delta\varepsilon$ in the porous structure 10 is not limited to a particular value. The largest value of $\Delta\varepsilon$ is, for example, 0.1 or more and 0.3 or less. This prevents an increase of the thickness of the porous structure 10 when the porous structure 10 is formed such that the relative permittivity increases or decreases in stages in the thickness direction of the resin sheet 1a from the end portions 12 of the porous structure 10 toward the boundary portion 11b.

The thickness of the porous structure 10 is not limited to a particular value as long as the resin sheet 1a can have an increased transmittance of a millimeter wave. The porous structure 10 has a thickness of, for example, 1 mm or more. In this case, the resin sheet 1a can have an increased transmittance of a millimeter wave and can protect a millimeter-wave radar as appropriate.

The thickness of the porous structure 10 is desirably 2 mm or more, and more desirably 3 mm or more. The thickness of the porous structure 10 is, for example, 10 mm or less. This makes it easy to reduce the weight of the resin sheet 1a.

The relative permittivity of the porous structure 10 is not limited to a particular value as long as $\Delta\varepsilon$ is 0.3 or less and the relative permittivity increases or decreases in stages from the end portions 12 of the porous structure 10 toward the boundary portion 11b. The porous structure 10 has a relative permittivity of, for example, 1.01 or more and 4.99 or less. In this case, the resin sheet 1a can have an increased transmittance of a millimeter wave more reliably.

The relative permittivity $\varepsilon_K$ of the material of the skeleton of the porous structure 10 is not limited to a particular value as long as the resin sheet 1a can have an increased transmittance of a millimeter wave. The relative permittivity $\varepsilon_K$ is, for example, 2.2 to 5.0.

The material of the skeleton of the porous structure 10 is not limited to a particular material as long as the resin sheet 1a can have an increased transmittance of a millimeter wave. Examples of the material include polyethylene, polypropylene, polystyrene, polyester, polyamide, polyvinyl chloride, polyvinylidene chloride, polybutene, polyacetal, polyphenylene oxide, polymethylmethacrylate, polysulfone, polyethersulfone, polyetherketone, polyetheretherketone, polyamide-imide, polycarbonate, polyarylate, polyimide, fluorine resin, ethylene-propylene resin, ethylene-ethylacrylate, epoxy resin, urethane resin, imide resin, acrylic resin, and norbornene resin. The skeleton of the porous structure 10 may include only one resin material or may include a plurality of resin materials. The skeleton of the porous structure 10 may be formed of a polymer alloy or may be formed of a composite material of a resin matrix and a filler.

The relative permittivity in each of the end portions 12 of the porous structure 10 is not limited to a particular value as long as $\Delta\varepsilon$ is 0.3 or less and the relative permittivity increases or decreases in stages from the end portions 12 of the porous structure 10 toward the boundary portion 11b. When the relative permittivity increases in stages from the end portions 12 of the porous structure 10 toward the boundary portion 11b, the relative permittivity in each of the end portions 12 of the porous structure 10 is, for example, 1.8 or less. In this case, the resin sheet 1a can reduce reflection of a millimeter wave and can have an increased millimeter-wave transmittance, for example, when the resin sheet 1a is used such that the end portions 12 of the porous structure 10 is in contact a substance, such as air, having a relatively low relative permittivity. The relative permittivity in each of the end portions 12 of the porous structure 10 may be 1.75 or less, 1.7 or less, or 1.65 or less.

As shown in FIG. 1, the porous structure 10 has pores 13. The pore diameter of each pore 13 is not limited to a particular value as long as $\Delta\varepsilon$ is 0.3 or less and the relative permittivity increases or decreases in stages from the end portions 12 of the porous structure 10 toward the boundary portion 11b. Each pore 13 has a pore diameter equal to or less than 10% of the wavelength of a millimeter wave. In this case, the resin sheet 1a can more reliably reduce reflection of a millimeter wave and can have an increased millimeter-wave transmittance. The pore diameter of each pore 13 refers to, for example, the maximum diameter thereof observed in a scanning electron microscope (SEM) image of a cross-section of the porous structure 10. The pore diameter of each pore 13 may be determined based on the X-ray CT measurement result for the porous structure 10.

The pore diameter of each pore 13 is desirably equal to or less than 7% of the wavelength of a millimeter wave.

A ratio of the number of pores 13 having a pore diameter equal to or less than 10% of the wavelength of a millimeter wave to the number of pores 13 included in the porous structure 10 is, for example, 80% or more, desirably 85% or more, more desirably 90% or more, even more desirably 95% or more, and particularly desirably 98% or more. The porous structure 10 may have, as pores, only the pores 13 each having a pore diameter equal to or less than 10% of the wavelength of a millimeter wave.

The porous structure 10 has, for example, the pores 13 each having a pore diameter of 20 to 500 $\mu$m. In this case, the resin sheet 1a can more reliably reduce reflection of a millimeter wave and can have an increased millimeter-wave transmittance. The pore diameter of each pore 13 may be 450 $\mu$m or less, 400 $\mu$m or less, or 350 $\mu$m or less. The porous structure 10 may have, for example, the pores 13 each having a pore diameter of 20 to 550 $\mu$m.

A ratio of the number of pores 13 having a pore diameter of 20 to 500 $\mu$m to the number of pores 13 included in the porous structure 10 is, for example, 80% or more, desirably 85% or more, more desirably 90% or more, even more desirably 95% or more, and particularly desirably 98% or more. The porous structure 10 may have, as pores, only the pores 13 each having a pore diameter of 20 to 500 $\mu$m. The porous structure 10 may have, as pores, only the pores 13 each having a pore diameter of 20 to 550 $\mu$m.

As shown in FIG. 2, the relative permittivity of the porous structure 10 varies, for example, in the thickness direction of the resin sheet 1a in a way that can be regarded as discrete. Such a porous structure 10 can be formed, for example, by laminating a plurality of homogeneous porous layers having different porosities. Alternatively, such a porous structure 10 may be formed by 3D printing.

The resin sheet 1a may include, for example, a skin layer (not illustrated), and the resin sheet 1a may have one surface formed by the skin layer or may have two surfaces each formed by the skin layer. The skin layer has a thickness, for example, equal to or less than 10% of the wavelength of a millimeter wave. The skin layer having a thickness equal to or less than 10% of the wavelength of a millimeter wave is likely to have a reduced effect on transmission of a millimeter wave even when the skin layer has a relatively high relative permittivity.

The skin layer 20 is typically a solid layer. The thickness of the skin layer 20 is, for example, 550 $\mu$m or less, desirably 500 $\mu$m or less, more desirably 450 $\mu$m or less, even more desirably 400 $\mu$m or less.

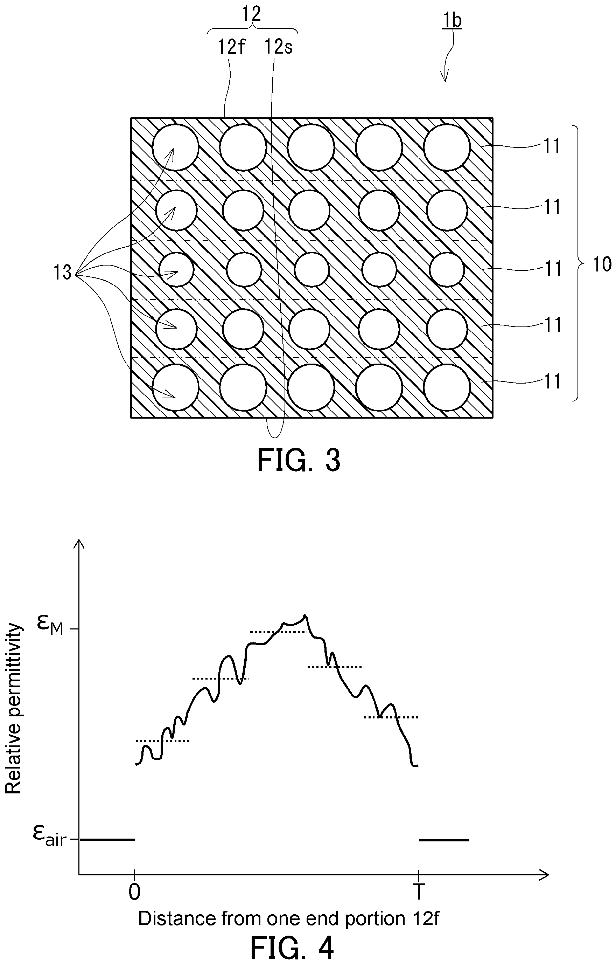

A resin sheet 1b shown in FIG. 3 can also be provided. The resin sheet 1b is configured in the same manner as the resin sheet 1a, unless otherwise described. The components of the resin sheet 1b that are the same as or correspond to those of the resin sheet 1a are denoted by the same reference characters, and detailed descriptions of such components are omitted. The description given for the resin sheet 1a can apply to the resin sheet 1b, unless there is technical inconsistency.

FIG. 4 shows a relation between the distance from the one end portion 12f in the thickness direction of the resin sheet 1b and the relative permittivity. In the resin sheet 1b, the relative permittivity of the porous structure 10 varies, for example, in the thickness direction of the resin sheet 1b in a way that can be regarded as continuous. Such a porous structure 10 can be formed, for example, by foam injection molding.
Alternatively, such a porous structure 10 may be formed by 3D printing.

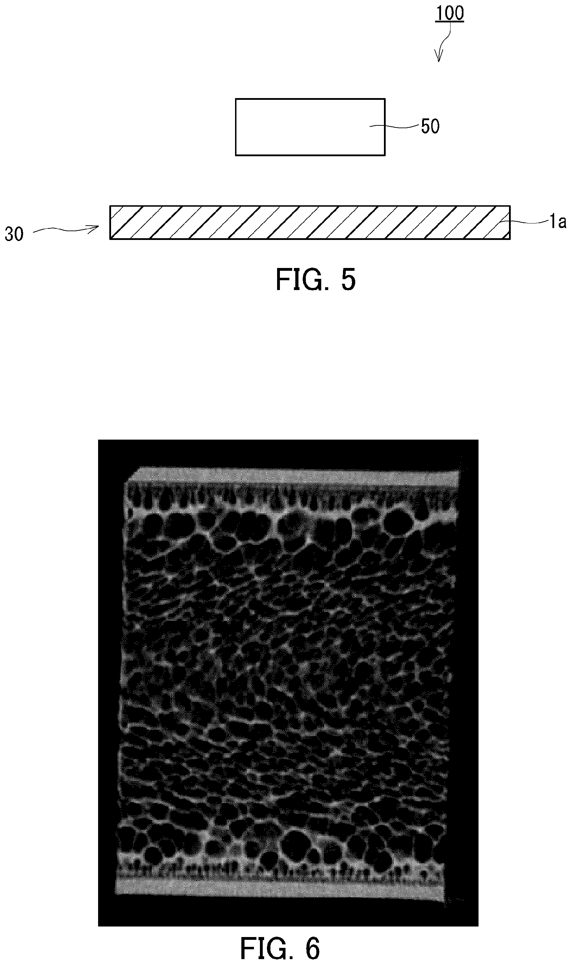

For example, a radar system 100 can be provided using the resin sheets 1a and 1b. As shown in FIG. 5, the radar system 100 includes a millimeter-wave radar 50 and the resin sheet 1a. The millimeter-wave radar 50 uses an FMCW. The resin sheet 1a allows transmission of a millimeter wave emitted from the millimeter-wave radar 50 through the resin sheet 1a. As described above, the resin sheet 1a can increase the transmittance of a wideband millimeter wave. Because of this, the radar system 100 tends to have a high accuracy of object sensing.

As shown in FIG. 5, the radar system 100 includes, for example, a housing 30. The housing 30 protects the millimeter-wave radar 50. For example, the housing 30 is formed at least partly of the resin sheet 1a.

As shown in FIG. 5, in the radar system 100, the end portions 12 of the porous structure 10 are in contact with, for example, air. In this case, the average relative permittivity $\varepsilon_A$ is maximum in the boundary portion 11b.

The radar system 100 may include the resin sheet 1b instead of the resin sheet 1a.

EXAMPLES

The present invention will be described in more detail by examples. The present invention is not limited to the examples given below. First, methods for evaluation of examples will be described.

<Transmission loss improvement rate>

A transmission coefficient $S_{21}$ obtained by allowing a millimeter wave with a frequency of 60 to 80 GHz to be perpendicularly incident on each of resin sheets according to Examples and Comparative Examples was measured according to a horn antenna method defined in Japanese Industrial Standards (JIS) R 1679: 2007, and an average transmission loss $T^A_S$ [dB] in the frequency range of 60 to 80 GHz was determined. Moreover, a transmission coefficient $S_{21}$ obtained by allowing a millimeter wave with a frequency of 60 to 80 GHz to be perpendicularly incident on another resin substrate A to which no resin sheet was adhered was measured, and an average transmission loss $T^A_R$ [dB] in the frequency range of 60 to 80 GHz was determined. A transmission loss improvement rate R of each resin sheet was determined by the following equation (2). Table 1 shows the results. It should be noted that the wavelength of a millimeter wave with a frequency of 60 Hz is 5 mm, and the wavelength of a millimeter wave with a frequency of 80 GHz is 3.75 mm. As a measurement apparatus was used a millimeterwave-microwave transmission loss measurement system, Model No. RTS01, manufactured by KEYCOM Corporation or a 30 mmΦ transmission loss-return loss measurement system for millimeter waves, Model No. RTS06, manufactured by KEYCOM Corporation.

$$\text{Improvement rate } R = |T^A_S - T^A_R|/|T^A_R| \quad \text{Equation (2)}$$

<Pore diameters of pores>

Cross-sections of each of the resin sheets according to Examples and Comparative Examples were measured by X-ray CT scanning using an X-ray CT scanner SKYSCAN 1272 manufactured by Bruker Corporation. The image analysis software Image J provided by the National Institutes of Health, USA, was used for reconstruction from cross-sectional images of the porous structure of each resin sheet, and a smallest pore diameter and a largest pore diameter were calculated. The average of the diameters of inscribed circles of pores in cross-sectional images taken between an interface and a position was determined as the smallest pore diameter, the interface being between one skin layer of the resin sheet and the porous structure, the position being 200 $\mu$m away from the interface in the thickness direction of the resin sheet toward the other skin layer of the resin sheet. On the other hand, the average of the diameters of inscribed circles of pores in cross-sectional images was determined as the largest pore diameter, the cross-sectional images being taken between a position being 250 $\mu$m away in the thickness direction of the resin sheet from a center defined in the thickness direction of the resin sheet toward one principal surface of the resin sheet and a position being 250 $\mu$m away in the thickness direction of the resin sheet from the center toward the other principal surface of the resin sheet. Table 1 shows the results.

<Relative permittivity>

A relative permittivity of a resin forming the skeleton of the porous structure of each of the resin sheets according to Examples and Comparative Examples was measured at 10 GHz by a cavity resonance method. Table 1 shows the results. Each of the resin sheets according to Examples and Comparative Examples was measured by X-ray CT scanning using an X-ray CT scanner SKYSCAN 1272 manufactured by Bruker Corporation. On the basis of this measurement result, the porosity p in each of a plurality of 100-$\mu$m-thick layer portions forming the porous structure and arranged in the thickness direction of the resin sheet was determined. The average relative permittivity $\varepsilon_L$ of each of the layer portions was calculated by the above equation (1) from the thus-determined porosity p, the relative permittivity $\varepsilon_K$ of the resin measured as described above, and the relative permittivity $\varepsilon_{air}$ (= 1.0) of air. The difference $\Delta\varepsilon$ between average relative permittivities $\varepsilon_L$ in each two adjacent layer portions of the plurality of layer portions was calculated. Table 1 shows the results. Table 1 also shows an average relative permittivity in two of the plurality of layer portions, the two layer portions forming the end portions of the porous structure.

<Thickness>

Thicknesses of the resin sheets according to Examples and Comparative Examples were measured using a micrometer. Table 1 shows the results.

<Example 1>

A mixture of supercritical nitrogen and polypropylene was molded by foaming and injection using a MuCell foaming injection molding apparatus to obtain a resin sheet according to Example 1. The resin sheet according to Example 1 had two principal surfaces each formed by a 350-pm-thick solid skin layer. A portion of the resin sheet according to Example 1 excluding the skin layers had a porous structure. The porous structure had a relative permittivity increasing in stages from the end portions toward a middle portion defined in the thickness direction of the resin sheet. The porous structure had a relative permittivity increasing in stages from one principal surface toward the other principal surface. FIG. 6 shows an example of an X-ray CT scan image of the resin sheet according to Example 1.

<Example 2>

A mixture of supercritical nitrogen and polypropylene was molded by foaming and injection using a MuCell foaming injection molding apparatus to obtain a resin sheet according to Example 2. The polypropylene had a relative permittivity of 2.2. The resin sheet according to Example 2 had two principal surfaces each formed by a 300-pm-thick solid skin layer. A portion of the resin sheet according to Example 2 excluding the skin layers had a porous structure. The porous structure had a relative permittivity increasing in stages from the end portions toward the middle portion defined in the thickness direction of the resin sheet.

<Example 3>

A mixture of supercritical nitrogen and polypropylene was molded by foaming and injection using a MuCell foaming injection molding apparatus to obtain a resin sheet according to Example 3. The resin sheet according to Example 3 had two principal surfaces each formed by a 150-pm-thick solid skin layer. A portion of the resin sheet according to Example 3 excluding the skin layers had a porous structure. The porous structure had a relative permittivity increasing in stages from the end portions toward the middle portion defined in the thickness direction of the resin sheet.

<Example 4>

A mixture of supercritical nitrogen and polyamide 6 was molded by foaming and injection using a MuCell foaming injection molding apparatus to obtain a resin sheet according to Example 4. The polyamide 6 had a relative permittivity of 4.9. The resin sheet according to Example 4 had two principal surfaces each formed by a 400-pm-thick solid skin layer. A portion of the resin sheet according to Example 4 excluding the skin layers had a porous structure. The porous structure had a relative permittivity increasing in stages from the end portions toward the middle portion defined in the thickness direction of the resin sheet.

<Example 5>

A mixture of supercritical carbon dioxide and polypropylene was molded by foaming and injection using a MuCell foaming injection molding apparatus to obtain a resin sheet according to Example 5. The resin sheet according to Example 5 had two principal surfaces each formed by a 510-$\mu$m-thick solid skin layer. A portion of the resin sheet according to Example 5 excluding the skin layers had a porous structure. The porous structure had a relative permittivity increasing in stages from the end portions toward the middle portion defined in the thickness direction of the resin sheet.

<Example 6>

A polypropylene resin ABSORTOMER EP1001 manufactured by Mitsui Chemicals, Inc. and a thermo-expandable microcapsule Matsumoto Microsphere FN-180S manufactured by Matsumoto Yushi-Seiyaku Co., Ltd. were mixed using Labo Plastomill at 100°C for 15 minutes to obtain a mixture, which was heat-pressed using a hot plate adjusted at 100°C to produce a 1000-$\mu$m-thick sheet having 50-square-millimeter principal surfaces. Labo Plastomill is a registered trademark of Toyo Seiki Seisaku-sho, Ltd. Then, the sheet was expanded at 150°C for 10 minutes to a thickness of 2000 $\mu$m to obtain a resin sheet according to Example 6. The thickness of the resin sheet was adjusted using a brass spacer having a dimension of 2000 $\mu$m. A portion of the resin sheet according to Example 6 excluding skin layers had a porous structure. The porous structure had a relative permittivity increasing in stages from the end portions toward the middle portion defined in the thickness direction of the resin sheet.

<Example 7>

A mixture of supercritical carbon dioxide and polypropylene was molded by foaming and injection using a MuCell foaming injection molding apparatus to obtain a resin sheet according to Example 7. The resin sheet according to Example 7 had two principal surfaces each formed by a 320-pm-thick solid skin layer. A portion of the resin sheet according to Example 7 excluding the skin layers had a porous structure. The porous structure had a relative permittivity increasing in stages from the end portions toward the middle portion defined in the thickness direction of the resin sheet.

<Comparative Example 1>

A homogeneous polyethylene foam was cut to a given size to obtain a resin sheet according to Comparative Example 1. The resin sheet according to Comparative Example 1 had a relative permittivity being constant from one principal surface to the other principal surface.

As shown in Table 1, the resin sheets according to Examples had an improvement rate R of 35% or more. On the other hand, the resin sheet according to Comparative Example 1 had an improvement rate R of less than 35%.

These indicate that it is advantageous for the porous structure of the resin sheet to have a relative permittivity increasing in stages from the end portions toward the middle portion defined in the thickness direction of the resin sheet, the relative permittivity increasing such that $\Delta\varepsilon$ is 0.3 or less.

[Table 1]

| | Ex. 1 | Ex. 2 | Ex. 3 | Ex. 4 | Ex. 5 | Ex. 6 | Ex. 7 | Comp. Ex. 1 |
|---|---|---|---|---|---|---|---|---|
| Difference $\Delta\varepsilon$ between average relative permittivities | 0.09 to 0.30 | 0.01 to 0.30 | 0.01 to 0.30 | 0.01 to 0.30 | 0.01 to 0.30 | 0.01 to 0.12 | 0.01 to 0.09 | - |
| Pore diameters [$\mu$m] of pores | 20 to 300 | 30 to 150 | 30 to 200 | 30 to 150 | 20 to 300 | 40 to 80 | 450 to 550 | 300 |
| Thickness [mm] | 10 | 6 | 3 | 10 | 2 | 2 | 3 | 1 |
| Relative permittivity of resin in porous structure | - | 2.2 | 2.2 | 4.9 | 2.2 | 2.6 | 2.2 | 2.2 |
| Thickness [$\mu$m] of skin layer | 350 | 300 | 150 | 400 | 510 | 100 | 320 | 100 |
| Average relative permittivity in each end portion of porous structure | 1.19 | 1.48 | 1.60 | 1.62 | 1.7 | 1.8 | 1.6 | 1.18 |
| Improvement rate R [%] | 89 | 85 | 82 | 85 | 37 | 43 | 41 | 30 |

**Claims**

1. A resin sheet comprising:

   a porous structure configured to adjust transmission of a millimeter wave, wherein
   the porous structure has a relative permittivity varying in a thickness direction of the resin sheet such that a difference between average relative permittivities in two adjacent layer portions is a predetermined value or less, the layer portions each having a particular thickness smaller than a wavelength of the millimeter wave,
   the porous structure includes a boundary portion being one of the layer portions, the boundary portion having a maximum or minimum average relative permittivity, and
   the relative permittivity increases or decreases in stages from end portions of the porous structure toward the boundary portion, the end portions being defined in the thickness direction of the resin sheet.

2. The resin sheet according to claim 1, wherein

   the average relative permittivity is maximum in the boundary portion, and
   the relative permittivity increases in stages from the end portions of the porous structure toward the boundary portion, the end portions being defined in the thickness direction of the resin sheet.

3. The resin sheet according to claim 2, wherein the relative permittivity is 1.8 or less at the end portions.

4. The resin sheet according to claim 2, wherein the relative permittivity is 1.75 or less at the end portions.

5. The resin sheet according to any one of claims 1 to 4, wherein the particular thickness is 100 $\mu$m and the predetermined value is 0.3.

6. The resin sheet according to any one of claims 1 to 5, wherein the porous structure has a thickness of 1 mm or more.

7. The resin sheet according to any one of claims 1 to 6, wherein the porous structure has a relative permittivity of 1.01 or more and 4.99 or less.

8. The resin sheet according to any one of claims 1 to 7, wherein the porous structure has pores each having a pore diameter equal to or less than 10% of the wavelength of the millimeter wave.

9. The resin sheet according to any one of claims 1 to 8, wherein the porous structure has pores each having a pore diameter of 20 to 550 $\mu$m.

10. The resin sheet according to any one of claims 1 to 9, wherein the porous structure has pores each having a pore diameter of 20 to 500 $\mu$m.

11. A radar system comprising:

a millimeter-wave radar using a frequency-modulated continuous wave; and
the resin sheet according to any one of claims 1 to 10 allowing transmission of a millimeter wave emitted from the millimeter-wave radar through the resin sheet.

12. The radar system according to claim 11, further comprising a housing formed at least partly of the resin sheet.

13. The radar system according to claim 11 or 12, wherein the end portions of the porous structure in the resin sheet are in contact with air.

FIG. 1

Distance from one end portion 12f

FIG. 2

FIG. 3

Distance from one end portion 12f

FIG. 4

FIG. 5

FIG. 6

## INTERNATIONAL SEARCH REPORT

| International application No. |
| --- |
| PCT/JP2021/008001 |

**A. CLASSIFICATION OF SUBJECT MATTER**
G01S 7/03(2006.01)i; C08J 9/12(2006.01)i; H01Q 1/42(2006.01)i
FI: G01S7/03 246; H01Q1/42; C08J9/12 CEZ
According to International Patent Classification (IPC) or to both national classification and IPC

**B. FIELDS SEARCHED**

Minimum documentation searched (classification system followed by classification symbols)
G01S7/00-7/42; G01S13/00-13/95; H01Q1/42; C08J9/12

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 10-150316 A (FURUKAWA ELECTRIC CO., LTD.) 02 June 1998 (1998-06-02) claims, paragraphs [0009]-[0015], fig. 1-2 | 1-13 |
| Y | JP 54-107655 A (NIPPON TELEGRAPH AND TELEPHONE CORPORATION) 23 August 1979 (1979-08-23) claims, page 2, upper left column, line 4 to lower left column, line 9, fig. 3, 5 | 1-13 |
| Y | WO 2011/033935 A1 (MITSUBISHI ELECTRIC CORP.) 24 March 2011 (2011-03-24) paragraphs [0004], [0009]-[0010], fig. 1-2 | 1-13 |
| Y | WO 2017/104714 A1 (TECHNO POLYMER CO., LTD.) 22 June 2017 (2017-06-22) paragraphs [0144]-[0148], fig. 8-11 | 1-13 |
| Y | JP 2003-078325 A (HITACHI CABLE, LTD.) 14 March 2003 (2003-03-14) paragraphs [0037]-[0038], fig. 1-2 | 3-4 |

☒ Further documents are listed in the continuation of Box C.        ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 April 2021 (05.04.2021) | 11 May 2021 (11.05.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/008001 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 63-316904 A (SUMITOMO ELECTRIC INDUSTRIES, LTD.) 26 December 1988 (1988-12-26) entire text, all drawings | 1-13 |
| A | US 2017/0008251 A1 (RAYTHEON COMPANY) 12 January 2017 (2017-01-12) entire text, all drawings | 1-13 |

Form PCT/ISA/210 (continuation of second sheet) (January 2015)

**INTERNATIONAL SEARCH REPORT**
Information on patent family members

International application no.

PCT/JP2021/008001

| Patent Documents referred in the Report | Publication Date | Patent Family | Publication Date |
|---|---|---|---|
| JP 10-150316 A | 02 Jun. 1998 | (Family: none) | |
| JP 54-107655 A | 23 Aug. 1979 | (Family: none) | |
| WO 2011/033935 A1 | 24 Mar. 2011 | US 2012/0127057 A1 paragraphs [0003], [0013]-[0014], fig. 1-2 EP 2479840 A1 | |
| WO 2017/104714 A1 | 22 Jun. 2017 | EP 3392306 A1 paragraphs [0237]-[0241], fig. 8-11 CN 108603005 A | |
| JP 2003-078325 A | 14 Mar. 2003 | (Family: none) | |
| JP 63-316904 A | 26 Dec. 1988 | (Family: none) | |
| US 2017/0008251 A1 | 12 Jan. 2017 | (Family: none) | |

Form PCT/ISA/210 (patent family annex) (January 2015)

**EP 4 130 780 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150109162 A1